(19) **Europäisches Patentamt**
**European Patent Office**
**Office européen des brevets**

(11) **EP 3 472 602 B1**

(12) **EUROPÄISCHE PATENTSCHRIFT**

(45) Veröffentlichungstag und Bekanntmachung des Hinweises auf die Patenterteilung:
**04.06.2025 Patentblatt 2025/23**

(21) Anmeldenummer: **17733399.4**

(22) Anmeldetag: **19.06.2017**

(51) Internationale Patentklassifikation (IPC):
***G01N 25/18*** *(2006.01)*

(52) Gemeinsame Patentklassifikation (CPC):
**G01N 25/18**

(86) Internationale Anmeldenummer:
**PCT/EP2017/064912**

(87) Internationale Veröffentlichungsnummer:
**WO 2017/220482 (28.12.2017 Gazette 2017/52)**

(54) **VERFAHREN ZUR BESTIMMUNG DER WÄRMELEITFÄHIGKEIT UND DER THERMOELEKTRISCHEN GÜTE AN THERMOELEKTRISCHEN PROBEN**

METHOD FOR DETERMINING THE THERMAL CONDUCTIVITY AND THE THERMOELECTRIC FIGURE OF MERIT AT THERMOELECTRIC SAMPLES

PROCÉDÉ DE DÉTERMINATION DE LA CONDUCTIVITÉ THERMIQUE ET DU FACTEUR DE MÉRITE THERMOÉLECTRIQUE POUR DES ÉCHANTILLONS THERMOÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.06.2016 DE 102016211079**
**01.08.2016 DE 102016214137**

(43) Veröffentlichungstag der Anmeldung:
**24.04.2019 Patentblatt 2019/17**

(73) Patentinhaber: **Deutsches Zentrum für Luft- und Raumfahrt e.V.**
**51147 Köln (DE)**

(72) Erfinder:
• **MÜLLER, Eckhard**
**53604 Bad Honnef (DE)**
• **DE BOOR, Johannes**
**51143 Köln (DE)**
• **KOLB, Hendrik**
**56307 Dürrholz (DE)**

(74) Vertreter: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) Entgegenhaltungen:
• **KOLB H ET AL: "Simultaneous measurement of all thermoelectric properties of bulk materials in the temperature range 300-600 K", REVIEW OF SCIENTIFIC INSTRUMENTS, AIP, MELVILLE, NY, US, vol. 86, no. 7, 13 July 2015 (2015-07-13), XP012198925, ISSN: 0034-6748, [retrieved on 20170807], DOI: 10.1063/1.4926404**
• **KWON BEOMJIN ET AL: "Impact of parasitic thermal effects on thermoelectric property measurements by Harman method", REVIEW OF SCIENTIFIC INSTRUMENTS, AIP, MELVILLE, NY, US, vol. 85, no. 4, 9 April 2014 (2014-04-09), XP012184051, ISSN: 0034-6748, [retrieved on 20170807], DOI: 10.1063/1.4870413**
• **KASPER A. BORUP ET AL: "Measuring thermoelectric transport properties of materials", ENERGY & ENVIRONMENTAL SCIENCE, vol. 8, no. 2, 23 September 2014 (2014-09-23), pages 423 - 435, XP055396772, ISSN: 1754-5692, DOI: 10.1039/C4EE01320D**

**EP 3 472 602 B1**

**Beschreibung**

Die vorliegende Erfindung betrifft ein transientes Verfahren zur Eliminierung des Kontakt-Wärmewiderstandes bei der Messung der Wärmeleitfähigkeit beziehungsweise der thermoelektrischen Güte an thermoelektrischen Proben.

Moderne Verfahren zur Bestimmung der Wärmeleitfähigkeit an bulk-Proben stützen sich auf eine transiente Methode zur Messung der thermischen Diffusivität (Flash-Methode), deren Prinzip berührungslos und unbeeinträchtigt von Wärmeübergängen ist. Für Simultanmessverfahren, die eine gleichzeitige Bestimmung der elektrischen und thermischen Leitfähigkeit ermöglichen, sind kontaktlose Verfahren jedoch nicht möglich. Die Messung der Wärmeleitfähigkeit ist dann grundsätzlich durch den zumeist unbekannten Wärmewiderstand der Kontaktierung im Probenhalter verfälscht.

Dieser Wärmewiderstand ist im Wärmestrompfad seriell mit der Probe verbunden. Bei gut reproduzierbarer Kontaktierung, das heißt kaum variierendem Kontaktwiderstand bei mehrfacher Herstellung, gleichzeitig gut reproduzierbaren thermischen Umgebungsbedingungen und gut reproduzierbaren Probeneigenschaften sowie ausreichender herstellbarer Probengröße kann er über eine Längenvariation der Probe eliminiert werden. Die genannten Vorbedingungen sind jedoch oft nicht gegeben, so dass dieses Vorgehen entweder undurchführbar oder sowohl aufwendig als auch mit beträchtlicher Restunsicherheit verbunden ist.

Alternativ kann der Kontaktwiderstand analog zu einer elektrischen 4-Punkt-Messung in aufwendigen Messanordnungen eliminiert werden, indem die Temperaturen der Wärmequelle und Wärmesenke und gleichzeitig die Temperatur auf der Probenoberfläche an mehreren Stellen präzise und wechselwirkungsfrei gemessen werden. Dies ist messtechnisch äußerst aufwendig, denn über eine separate Thermalisierung aller Messstellen muss eine Verfälschung der Temperaturmessung durch zu- oder abfließende Wärmeströme zuverlässig verhindert werden. Solche Systeme wurden bereits demonstriert, sie sind für Routinemessungen im Materiallabor jedoch zu aufwendig und in kommerziellen und laborüblichen Anlagen nicht realisiert.

Der Grenzflächen-Wärmewiderstand in Materialverbunden kann auch über die Flash-Methode ermittelt werden, wenn die thermophysikalischen Eigenschaften der verbundenen Materialien / Schichten bekannt sind. Die gleichzeitige Bestimmung der Wärmeleitfähigkeit eines Probenmaterials und des thermischen Kontaktwiderstandes ist damit jedoch nicht möglich, da sich beide Effekte in der seriellen Konfiguration addieren und nicht zu separieren sind.

Bekannt unter den kontaktierenden Verfahren zur Messung der Wärmeleitfähigkeit sind zum Beispiel die Kohlrausch-Methode, die die Eigenerwärmung durch Joule-Wärme nutzt und unter der Voraussetzung eines adiabatischen Abschlusses in radialer Richtung die axiale Temperaturverteilung eines Probenstabes auswertet, weiterhin die Ioffe-Methode als ein dynamisches Absolutverfahren, bei dem die Wärmeleitung durch eine Probe aus dem Zeitverlauf des Abklingens einer anliegenden Temperaturdifferenz bestimmt wird, wobei die Wärmekapazität eines mit der Probe verbundenen und nach außen adiabatisch isolierten Reservoirs bekannt sein muss, sowie stationäre Vergleichsverfahren, bei denen ein fester Wärmestrom seriell zur Probe eine Referenzprobe mit bekannter Wärmeleitfähigkeit durchfließt. Alle diese Methoden werden durch den Einfluss des thermischen Kontaktwiderstands verfälscht, sofern man keine Temperaturmessung an oder in der Probe selbst durchführt, was eine Veränderung/Bearbeitung der Probe selbst erfordern würde, fehleranfällig und für einen regulären Messbetrieb unpraktikabel aufwendig ist.

Beim historischen Kohlrausch-Verfahren als einer spezialisierten Labormethode wurde dieser besondere Aufwand, auch mangels Alternativverfahren zur damaligen Zeit, in Kauf genommen. Sowohl für die Ioffe-Methode und ihre Varianten als auch bei stationären Vergleichsverfahren kommt dies für die tägliche Praxis im Materiallabor jedoch nicht in Frage. Kontaktwiderstandskorrigierte Messungen der Wärmeleitfähigkeit in kontaktierenden Messverfahren stehen bislang nicht zur Verfügung.

Ein verbreitetes Verfahren zur Bestimmung der thermoelektrischen Güte von thermoelektrischen Wandlermaterialien ist die Harman-Methode, die eine Messung der Wärmeleitfähigkeit impliziert und auf dem Gleichgewicht zwischen der Peltierwärme, die mit einem elektrischen Strom durch die Probe gepumpt wird, und der rückfließenden Fourierwärme aufgrund der sich unter adiabatischem Abschluss aufbauenden Temperaturdifferenz beruht. Die Lage dieses Gleichgewichtes, ausgedrückt durch die Gleichgewichts-Temperaturdifferenz, ist unabhängig vom thermischen Kontaktwiderstand, jedoch berücksichtigt die etablierte Messmethodik, die auf der transienten Messung von Thermospannungen zur Verfolgung dieser Temperaturdifferenz und einer zeitlichen Rückextrapolation der Messsignale auf den Zeitpunkt der Abschaltung des Peltier-Stroms beruht, den Einfluss des thermischen Kontaktwiderstandes auf die Relaxation des Systems nicht, so dass aus der herkömmlichen Auswertung eine zu geringe Gleichgewichts-Temperaturdifferenz und - komplementär - ein zu großer Ohmscher Spannungsabfall ermittelt werden, mithin der Einfluss der Wärmeleitfähigkeit überschätzt und die elektrische Leitfähigkeit unterschätzt werden. Beide Effekte akkumulieren sich im Sinne einer Unterschätzung der thermoelektrischen Effektivität durch die herkömmliche Harman-Messung.

H. Kolb et al. (Review of Scientific Instruments 86, 073901 (2015)) offenbart die simultane Messung unterschiedlicher thermoelektrischer Eigenschaften von bulk-Materialien im Temperaturbereich von 300 bis 600 K. Diese basiert auf der Harman-Methode. B. Kwon et al. (Review of Scientific Instruments 85, 045108 (2014)) offenbart den Einfluss parasitärer thermische Effekte auf thermoelektrische Eigenschaften. Die Bestimmung der thermoelektrischen Eigenschaften basiert auf der Harman-Methode.

Eine Kenntnis des Kontaktwärmewiderstandes würde eine Korrektur und damit eine wesentlich genauere Messung der thermoelektrischen Effektivität mit der Harman-Methode erlauben, gleichzeitig würde sie eine Korrektur einer Messung der Wärmeleitfähigkeit in einer kontaktierten Einbausituation erlauben, die für simultane Messung der elektrischen und thermischen Leitfähigkeit unverzichtbar ist. Jedoch ist eine ergänzende oder in-situ-Messung des Wärmewiderstandes bis heute nicht bekannt. In der Bereitstellung eines entsprechenden Verfahrens liegt die Aufgabe der vorliegenden Erfindung.

Überraschenderweise hat sich gezeigt, dass eine Messung des thermischen Kontaktwiderstandes an einer thermoelektrischen Probe, die zwischen zwei unterschiedlich temperierten Blöcken angeordnet ist, unter Zuhilfenahme der elektrischen Messung von Thermospannungen (elektrischen Spannungen verbunden mit einer Temperaturdifferenz hervorgerufen durch den Seebeck-Effekt) erfolgen kann, ohne dass zusätzliche Messelemente (zum Beispiel thermostatisierte Sonden) an der Probe angebracht werden müssen oder eine aufwendige Längenvariation erforderlich wäre. Dies ist möglich durch die Auswertung des transienten zeitlichen Verhaltens der Messsignale in einer kurzen Zeitspanne unmittelbar nach einer sprungartigen Änderung der Stromstärke des Probenstromes aus einem stationären thermischen Zustand heraus.

In einer ersten Ausführungsform wird die der vorliegenden Erfindung zu Grunde liegende Aufgabe daher gelöst durch ein in Anspruch 1 beanspruchtes Verfahren zur Bestimmung der Wärmeleitfähigkeit $\kappa$ und der thermoelektrischen Güte $zT$ unter Eliminierung des Kontakt-Wärmewiderstandes $R_C^{th}$ an einer Probe, die ein thermoelektrisches Material umfasst, die zwischen zwei unterschiedlich temperierten Blöcken, welche adiabatisch von der Umgebung abgeschirmt sind, angeordnet und mit diesen über ein Kontaktmaterial in Verbindung gebracht ist, wobei an jedem Block wenigstens zwei elektrische Leitungen angebracht sind, die Leitungspaare bilden. Jeweils eine dieser Leitungen dient dazu, einen Gleichstrom einzuspeisen, der von einem Block über die Probe zum anderen Block fließt. Mit Hilfe des zweiten Leitungspaares, den sogenannten Spannungssonden, wird die Spannung $V_1$ vor und nach Änderung (Zu- oder Abschalten oder instantaner Änderung) des Stromes gemessen.

Das erfindungsgemäße Verfahren ist daher ein Verfahren zur Bestimmung der Wärmeleitfähigkeit $\kappa$ und der thermoelektrischen Güte $zT$ unter Eliminierung des Kontakt-Wärmewiderstandes $R_C^{th}$ an einer Probe (1), die ein thermoelektrisches Material umfasst, wobei die Probe (1) zwei räumlich voneinander getrennte Kontaktflächen aufweist und der Abstand zwischen diesen Kontaktflächen der Länge / entspricht, umfassend:

a) in Kontakt bringen einer ersten Kontaktfläche der Probe (1) über ein erstes Kontaktmaterial (3a) mit einem ersten Block (2a) und
b) in Kontakt bringen einer zweite Kontaktfläche der Probe (1) über ein zweites Kontaktmaterial (3b) mit einem zweiten Block (2b),

wobei erster Block (2a) und zweiter Block (2b) ein Metall und/oder eine metallische Beschichtung aufweisen, und
wenigstens einer der Blöcke adiabatisch von der Umgebung abgeschirmt ist,

c) Anbringen mindestens jeweils eines ersten Leitungspaares auf dem ersten Block (2a) und auf dem zweiten Block (2b), derart, dass sie über den jeweiligen Block (2a, 2b) elektrisch leitend mit dem jeweiligen Kontaktmaterial (3a, 3b) verbunden sind, so dass ein Gleichstrom von einem Block durch die Probe in den anderen Block fließen kann, sowie Aufbringen mindestens eines zweiten Leitungspaares bestehend aus Spannungssonden auf dem ersten und dem zweiten Block (2a, 2b), so dass eine Spannung V zwischen der Spannungssonde auf dem ersten Block (2a) und der Spannungssonde auf dem zweiten Block (2b) gemessen werden kann,
d) Erreichen eines Gleichgewichtszustandes zwischen einer Peltierwärme, die mit einem elektrischen Strom durch die Probe (1) über das erste Leitungspaar gepumpt wird, und einer rückfließenden Fourierwärme aufgrund der sich unter adiabatischem Abschluss aufbauenden Temperaturdifferenz und Messung einer Spannung $V_1$ über das zweite Leitungspaar bestehend aus Spannungssonden,
e) Änderung der Stromstärke zum Zeitpunkt $t_0$ und
f) zeitlich aufgelöste Messung der Spannung $V_1$ zwischen den Spannungssonden des zweiten Leitungspaares über einen Zeitraum unmittelbar nach Änderung der Stromstärke in Schritt e), wobei der Zeitraum wenigstens einer Halbwertszeit des raschen Abklingens und mit einer Abtastrate erfolgt, die es ermöglicht innerhalb der ersten Halbwertszeit wenigstens 10 bis 100 Messwerte (Spannungswerte) aufzuzeichnen,
g) sich an die Messung nach Schritt f) anschließende zeitaufgelöste Messung der Spannung $V_1$ zwischen den Spannungssonden des zweiten Leitungspaares über einen Zeitraum eines langsamen Abklingens bis sich das System annähernd auf einen neuen Gleichgewichtszustand eingestellt hat, mit einer Datenrate von mindestens 5, insbesondere mindestens 20, Werten pro Halbwertszeit des langsamen Abklingens beim Einlaufen in den neuen Gleichgewichtszustand,

wobei der Zeitraum in Schritt f) durch ein rasches Abfallen der Spannung im Vergleich mit dem Zeitraum in Schritt g), in welchem ein gleichmäßiges langsames Abklingen nach einem Exponentialgesetz erfolgt, gekennzeichnet ist,

h) numerische Anpassung von Daten der zeitaufgelösten Messung der Spannung $V_1$ aus Schritt g) durch eine exponentielle Funktion oder die Summe aus einer linearen und einer exponentiellen Funktion und zeitliche Extrapolation dieser Funktion des gemessenen Spannungsabfalls aus Schritt g) zum Erhalt einer Basislinie bis zum Zeitpunkt $t_0$, wobei aus der Extrapolation des gemessenen Spannungsabfalls hin zum Zeitpunkt $t_0$ eine Amplitude $A_1$ bestimmt wird,

i) Bilden der Differenz aus dieser Basislinie und den experimentellen Daten aus Schritt f), wobei die Differenz bei $t_0$ der Amplitude $A_2$ entspricht, und Bildung des Verhältnisses $A_2/A_1$, welches den relativen systematischen Fehler einer Wärmewiderstandsmessung an der Probe verursacht durch den Wärmewiderstand des Kontaktes angibt,

j) Bestimmung der Wärmeleitfähigkeit $\kappa$ und der thermoelektrischen Güte $zT$ unter Berücksichtigung des relativen systematischen Fehlers aus Schritt i).

Erster Kontakt (3a) und erstes Kontaktmaterial (3a) werden in der vorliegenden Anmeldung synonym verwendet. Während "Kontakt" einen Schwerpunkt auf die physikalischen Eigenschaften legt (Herstellung des Kontaktes zwischen Block und Probe), liegt der Schwerpunkt bei "Kontaktmaterial" auf dem Material, aus dem sich diese Eigenschaften ergeben. Zu verstehen ist hierunter dasselbe. Gleiches gilt auch für zweiten Kontakt (3b) und zweites Kontaktmaterial (3b). Sind erstes und zweites Kontaktmaterial beziehungsweise erster und zweiter Kontakt von einer Beschreibung umfasst, wird nur von "Kontakten" oder "Kontaktmaterialien" gesprochen. Ebenso umfasst der Begriff "Blöcke" immer sowohl den ersten Block (2a) als auch den zweiten Block (2b), soweit nicht explizit anders dargestellt.

Das System aus Blöcken (2a, 2b), Kontaktmaterialien (3a, 3b) und Probe (1) befindet sich zu Beginn der Messung in Schritt d) in einem Gleichgewichtszustand. Durch Änderung der Stromstärke wird das System auch aus diesem Gleichgewichtszustand gebracht. Nach einem gewissen Zeitraum erreicht das System dann einen neuen Gleichgewichtszustand.

Erfindungsgemäß ist, dass der Gleichgewichtszustand in Schritt d) bereits unter Zuführung eines Stromes erfolgt.

Schritt d) umfasst daher das Zuführen eines Gleichstroms über die Blöcke mittels einem ersten Leitungspaar, so dass der Strom von einem Block zum anderen Block fließt, wobei der Strom durch das Kontaktmaterial, die Probe und erneut das Kontaktmaterial fließt, und Beibehaltung des Stromflusses so lange, bis sich ein Gleichgewichtszustand einstellt. Nach Erhalt des Gleichgewichtszustandes wird die Spannung $V_1$ über das andere zweite Leitungspaar bestehend aus Spannungssonden gemessen.

Die Änderung der Stromstärke kann in diesem Fall das vollständige Abschalten des Stromes zum Zeitpunkt $t_0$ bedeuten, was erfindungsgemäß ebenfalls bevorzugt ist. Es ist jedoch auch möglich, dass die Stromstärke zum Zeitpunkt $t_0$ vergrößert oder verkleinert wird, also ein stärkerer oder schwächerer Strom angelegt wird.

Die Änderung der Stromstärke erfolgt dabei sprunghaft, das heißt die Änderung erfolgt nicht kontinuierlich, sondern es erfolgt eine unmittelbare Änderung auf den neuen Wert beziehungsweise die sofortige Abschaltung des Stroms.

Schritt f) des erfindungsgemäßen Verfahrens betrifft die zeitlich aufgelöste Messung der Spannung über einen kurzen Zeitraum unmittelbar nach Änderung der Stromstärke. Dieser ist durch ein anfängliches rascheres Abfallen der Spannung im Vergleich mit der folgenden Phase eines gleichmäßigen Abklingens nach einem einfachen Exponentialgesetz analog zur Kondensatorentladung gekennzeichnet. Die Spannungsmessung sollte über die Dauer von mindestens einer Halbwertszeit des raschen Abklingens und mit einer so hohen Abtastrate erfolgen, so dass mindestens 10 bis 100 Spannungswerte innerhalb der ersten Halbwertszeit aufgezeichnet werden können. Diese Halbwertszeit ist von der Größe des Kontaktwiderstandes abhängig und ist in typischen Fällen geringer als 1 s.

Schritt g) des erfindungsgemäßen Verfahrens betrifft die sich an Schritt f) anschließende zeitaufgelöste Messung der Spannung. Dieser erfolgt über einen Zeitraum, in dem das System sich annähernd auf den neuen Gleichgewichtszustand eingestellt hat und mit einer Datenrate von mindestens 5 bis 20 Werten pro Halbwertszeit des langsamen Abklingens beim Temperaturausgleich (bzw. Einlaufen in den neuen Gleichgewichtszustand). Diese Halbwertszeit ist von der Größe und den Eigenschaften der Probe und der Blöcke abhängig und beträgt in typischen Fällen in Laborgeometrie mit mm-großen Blöcken und Proben ca. 5 bis 60 s, bei großen Systemen wesentlich mehr; bei Miniaturausführungen oder Mikrosystemen ist sie kleiner.

In Schritt h) des erfindungsgemäßen Verfahrens erfolgt die numerische Anpassung der experimentellen Daten. Dabei ist diese abhängig von der Datenrate. Bei einer ausreichend hohen Datenrate und Signalqualität wird beginnend nach Abklingen des anfänglichen rascheren Abfalls über eine Zeit von etwa 0,3 Halbwertszeiten des langsameren Abklingens an eine lineare Funktion angepasst. Eine genauere Anpassung beginnend nach Abklingen des anfänglichen rascheren Abfalls über eine Zeit von ca. 3 bis 5 Halbwertszeiten des langsamen Abklingens erfolgt an einen Funktionsansatz $V_1(t) = A_1 * \exp(-t/\tau_1)$. Anschließend folgt eine zeitliche Extrapolation dieser Funktion des gemessenen Spannungsabfalls zum Erhalt einer Basislinie bis zum Zeitpunkt $t_0$.

Das erfindungsgemäße Verfahren ermöglicht somit eine korrekte Bestimmung von Wärmeleitfähigkeit $\kappa$ und thermoelektrischer Güte $zT$, wobei bei der Harman-Methode systemimmanente Fehler eliminiert werden.

Die thermoelektrische Güte *zT* ist abhängig von der Wärmeleitfähigkeit der Materialien, an welchen die Messung vorgenommen wird. Um eine thermoelektrische Probe zu analysieren, wird diese zwischen zwei Blöcke eingebracht und über ein Kontaktmaterial mit diesen Blöcken verbunden.

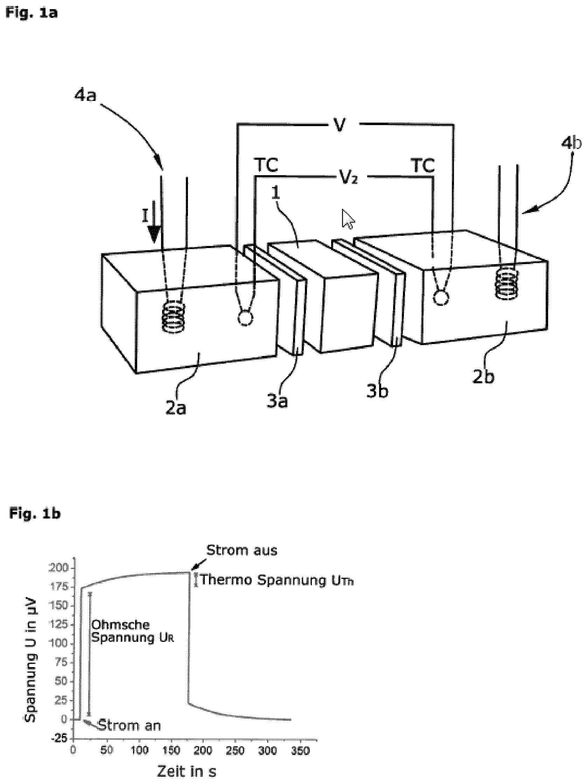

In Fig. 1a) ist ein entsprechender üblicher Messaufbau schematisch in einer Explosionszeichnung dargestellt. Dabei ist die Probe (1) mit einer regelmäßigen Geometrie dargestellt. Dies ist erfindungsgemäß jedoch nicht prinzipiell notwendig. Bei der Wahl der Geometrie ist lediglich zu beachten, dass die Kontakte möglichst Isotherme bilden sollten. Fig. 1a) zeigt somit den schematischen Aufbau eines Probenhalters zur Bestimmung der Wärmeleitfähigkeit einer Probe durch Temperaturausgleich zwischen zwei Metallblöcken bekannter Wärmekapazität, der auch die Durchführung der Harman-Messung erlaubt, wenn mindestens einer der Blöcke des Halters adiabatisch von der Umgebung abgeschlossen wird. Die Blocktemperaturen werden über Thermoelemente gemessen und können über integrierte Heizer gegenüber der Ausgangs/Umgebungstemperatur verändert werden. Der für die Messung notwendige Temperaturgradient über der Probe muss unter Ausnutzung des Peltier-Effektes durch einen angelegten Gleichstrom erzeugt werden, nicht etwa durch die integrierten Heizer. Bei Verwendung metallischer Kontakte, die einen verschwindenden Seebeck-Koeffizient aufweisen, sind die Thermospannungen $V_1$ beziehungsweise $V_2$, die zwischen den Blöcken gemessen werden, ein Maß für die Temperaturdifferenz über der thermoelektrischen Probe.

Die Probe weist zwei einander gegenüberliegende Kontaktflächen auf, diese sind jeweils über Kontaktmaterialien (3a, 3b) mit den Blöcken (2a, 2b) verbunden. Die Blöcke (2a, 2b) können Heizelemente (4a, 4b) aufweisen, dies ist jedoch nicht notwendig. Weiterhin weisen die Blöcke (2a, 2b) jeweils wenigstens zwei elektrische Anschlussleitungen auf. Sind zwei Sonden vorhanden, wie in Fig. 1a gezeigt, so kann eine Sonde zur Einspeisung des Stroms und der andere zur Messung der Spannung verwendet werden.

Wenigstens einer der Blöcke ist adiabatisch von der Umgebung abgeschirmt. Es können jedoch auch beide Blöcke (2a, 2b) adiabatisch abgeschirmt sein.

Dabei werden besonders gute Ergebnisse erhalten, wenn die thermische Masse der Blöcke größer ist als die thermische Masse der Probe. Insbesondere liegt das Verhältnis der Wärmekapazität der Blöcke zur Wärmekapazität der Probe im Bereich von 2:1 bis 50:1, insbesondere von 5:1 bis 20:1. Für Labormessungen an bulk-Proben weist typischerweise eine zu untersuchende Probe eine Länge von 5 mm bis 6 mm auf. Entsprechend ist ein Block in einer Größe von etwa 15 mm notwendig. Aber auch für stark davon abweichende Proben- und Blockmaße, beispielsweise auch Mikrosysteme, ist das erfindungsgemäße Verfahren anwendbar.

Das erfindungsgemäße Verfahren kann bei Raumtemperatur (üblicherweise 20 °C bis 25 °C) durchgeführt werden. Es ist jedoch auch möglich, die Temperaturabhängigkeit des relativen oder absoluten Kontaktwärmewiderstands zu bestimmen, in dem man das erfindungsgemäße Verfahren bei Temperaturen von 4 K bis 1200 °C, bevorzugt von 80 K bis 600 °C, besonders von Raumtemperatur bis 300 °C durchführt. Bevorzugt erfolgt das erfindungsgemäße Verfahren bei Temperaturen von 4 K bis 1500 K, insbesondere von 80 K bis 900 K, bevorzugt von 300 K bis 600 K.

Bevorzugt umfasst die Probe nicht nur ein thermoelektrisches Material, sondern besteht im Wesentlichen aus diesem. Die Reinheit der Probe ist dabei für das erfindungsgemäße Verfahren nicht relevant. Prinzipiell sollte die Probe möglichst homogen sein, so dass das das Verhältnis von elektrischer Leitfähigkeit zu Wärmeleitfähigkeit lokal nicht großen Schwankungen unterliegt. Wenn die elektrische Leitfähigkeit nicht zu niedrig ist, ist dies aber grundsätzlich schon durch das Wiedemann-Franz-Gesetz sichergestellt. Zudem stellt sich dieses Problem auch bei im Stand der Technik bekannten Messverfahren.

Der erste Block (2a) und der zweite Block (2b) bestehen im Wesentlichen aus dem gleichen Material beziehungsweise weisen die gleiche Beschichtung auf. Kontakte (3a, 3b), Blöcke (2a, 2b) und Sonden weisen bevorzugt denselben Seebeck-Koeffizienten auf. Während die Blöcke (2a, 2b) und die Sonden entsprechend gewählt werden, ist der Seebeck-Koeffizient der Kontakt (3a, 3b) häufig unbekannt. Mit metallischen Kontakten (3a, 3b) ist jedoch ein ausreichend geringer Seebeck-Koeffizient von üblicherweise betragsmäßig weniger als 5 $\mu$V/K zu erwarten und zu realisieren.

Der Seebeck-Koeffizient kann grundsätzlich sowohl positive als auch negative Werte annehmen. Werden in der vorliegenden Erfindung Werte für den Seebeck-Koeffizienten genannt, so sind hierunter die betragsmäßigen Werte zu verstehen.

Als Material für Blöcke (2a, 2b), Kontakte (3a, 3b) und Sonden wird insbesondere ein solches Material gewählt, welches einen Seebeck-Koeffizienten von betragsmäßig 10 $\mu$V/K oder weniger aufweist. Bevorzugt liegt der Seebeck-Koeffizient *S* betragsmäßig im Bereich von 0 $\mu$V/K bis 10 $\mu$V/K, insbesondere von 0 $\mu$V/K bis 8 $\mu$V/K oder von 0 $\mu$V/K bis 5 $\mu$V/K.

Blöcke (2a, 2b), Kontakte (3a, 3b) und Sonden weisen bevorzugt eine elektrische Leitfähigkeit von wenigstens $10^4$ S/cm, vorzugsweise von $10^4$ bis $10^9$ S/cm, insbesondere von $10^5$ bis $10^8$ S/cm oder von $10^5$ bis $10^7$ S/cm auf.

Insbesondere bevorzugt besitzen Blöcke (2a, 2b), Kontakte (3a, 3b) und Sonden eine Wärmeleitfähigkeit von mindestens 10 W/(m · K), insbesondere von mindestens 100 W/(m · K). Bei einem geringen Seebeck-Koeffizienten und Gleichheit zwischen Blöcken (2a, 2b), Kontakten (3a, 3b) und Sonden hinsichtlich des Seebeck-Koeffizienten, ist die Wärmeleitfähigkeit nicht relevant.

Metallische Materialien im Sinne der vorliegenden Erfindung sind solche Elemente, die sich im Periodensystem der Elemente links und unterhalb einer Trennungslinie zwischen Bor bis Astat befinden. Dabei sind auch Legierungen und innermetallische Phasen, welche insbesondere die vorgenannten Eigenschaften, nämlich geringen Seebeck-Koeffizient, elektrische Leitfähigkeit und Wärmeleitfähigkeit, aufweisen, hiervon umfasst. Charakteristisch für metallische Stoffeigenschaften sind eine hohe elektrische Leitfähigkeit, sowie hohe Wärmeleitfähigkeit und ein geringer Seebeck-Koeffizient.

Besonders geeignete und bevorzugte Materialien für Blöcke (2a, 2b) und Sonden sind Cu, Ag, Au, Ni, Al, Sn, Zn, Pb oder Mischungen aus diesen. Geeignete Materialien sind beispielsweise Bi, Sb, aber auch spezielle Thermoelement-Legierungen wie Konstantan, Chromel, Platin-Rhodium. Ist in der vorliegenden Anmeldung von einem Material für die Blöcke (2a, 2b) die Rede, so können die Blöcke aus diesem Material im Wesentlichen bestehen oder eine Beschichtung aus diesem Material aufweisen, welche dann die Eigenschaften der Blöcke (2a, 2b) für das erfindungsgemäße Verfahren definiert.

Das Kontaktmaterial (3a, 3b) ist, ebenso wie das Material des ersten und/oder zweiten Blocks, ein metallisches Material, welches die zuvor genannten Eigenschaften hinsichtlich Seebeck-Koeffizient, elektrischer Leitfähigkeit und Wärmeleitfähigkeit aufweist. Besonders bevorzugt ist das Kontaktmaterial bei Raumtemperatur und Normaldruck flüssig. Dies ermöglicht eine einfache Handhabung bei der Messung. Die Probe kann zwischen dem Block (2a, 2b) einfach eingeführt und herausgenommen werden, ohne dass Probe (1) und/oder Block (2a, 2b) einer besonderen mechanischen Beanspruchung unterworfen werden. Somit ist die mechanische Belastung der Probe gering, was insbesondere bei dünnen Proben (1) relevant ist.

Die Probe (1) umfasst ein thermoelektrisches Material und besteht insbesondere daraus. Der Seebeck-Koeffizient der Probe unterscheidet sich von dem der Sonden, um eine Messung zu ermöglichen. Bevorzugt ist der Seebeck-Koeffizient der Probe daher betragsmäßig größer 10 $\mu$V/K, bevorzugt liegt er betragsmäßig im Bereich von 25 $\mu$V/K bis 500 $\mu$V/K, insbesondere im Bereich von 50 $\mu$V/K bis 300 $\mu$V/K oder von 70 $\mu$V/K bis 250 $\mu$V/K, besonders von 100 $\mu$V/K bis 200 $\mu$V/K.

Die elektrische Leitfähigkeit der Probe (1) liegt vorzugsweise bei $10^4$ S/cm oder weniger, insbesondere von $10^1$ bis $10^4$ S/cm, bevorzugt von $10^2$ bis $10^3$ S/cm. Die Wärmeleitfähigkeit der Probe beträgt vorzugsweise 20 W/(m·K) oder weniger insbesondere im Bereich von 0 bis 15 W/(m·K), vorzugsweise von 0,2 bis 10 W/(m·K), besonders bevorzugt von 0,5 bis 5 W/(m·K). Bevorzugt ist das thermoelektrische Material der Probe (1) ausgewählt aus Skutteruditen, Clathraten, Halb-Heusler-Verbindungen, Zintl-Verbindungen, quaternäre Chalcogeniden, Telluriden, insbesondere Bismuttellurid, PbTe, SnTe und ihre Mischkristalle sowie Nanomaterialien auf ihrer Basis, beispielsweise LAST (Bleisilberantimontellurid), TAST (Zinnantimonsilbertellurid), BTST (Wismuthzinnsilbertellurid), usw.; Siliziden, insbesondere der Elemente Magnesium, Mangan, Eisen, Chrom und andere; Übergangsmetallen und ihren Mischkristallen, insbesondere darunter Stanniden und Germaniden; Sulfiden, insbesondere des Titans, Zinns usw. und Antimoniden, insbesondere $Zn_4Sb_4$ und ZnSb, MgAgSb, und viele andere mehr.

Eine Separation des Wärmewiderstandes der Probe und des Kontaktes aus dem Zeitverlauf des Messsignals ist möglich aufgrund des unterschiedlichen Verhältnisses zwischen Wärmewiderstand und Wärmekapazität in der Probe beziehungsweise am Kontakt im Zusammenwirken mit dem Umstand, dass der Ort der Freisetzung der Peltier-Wärme, die mit dem Probenstrom transportiert wird, unmittelbar an der Grenzfläche zwischen thermoelektrischem Material und dem metallischen Kontakt liegt, also in der Kette der thermischen Widerstände zwischen dem Kontaktwiderstand und der Probe lokalisiert ist. Das Gleichgewicht zwischen Peltier-Wärme und Fourier-Wärme ist unbeeinflusst vom thermischen Kontaktwiderstand.

Beispielhaft wird nun im Folgenden eine Ausführungsform, in welcher die Änderung der Stromstärke durch Abschaltung erreicht wird und sich das System in Schritt d) in einem Gleichgewichtszustand nach Zuschalten von Gleichstrom befindet beschrieben.

Zur Bestimmung der thermoelektrischen Güte wird nun ein Strom von einem Block in den anderen Block geleitet. Der Strom fließt somit von einem Block (2a) durch das Kontaktmaterial (3a) in die Probe (1), aus dieser durch das zweite Kontaktmaterial (3b) in den anderen Block (2b). Die Probe (1) umfasst ein thermoelektrisches Material, so dass sich mit dem Stromfluss aufgrund des damit verbundenen Peltier-Effekts eine Temperaturdifferenz im Inneren der Probe einstellt. Nach üblicherweise wenigen Minuten ist ein Gleichgewichtszustand erreicht. In diesem weist die Probe einen Temperaturgradienten auf. Das Prinzip der Harman-Messung erfordert, dass mindestens einer der Blöcke adiabatisch von der Umgebung separiert ist, das heißt sein Wärmeinhalt sich nur durch den Wärmestrom über die Probe verändern kann. Innerhalb des Kontaktmateriales sowie innerhalb der Blöcke (2a, 2b) besteht eine konstante Temperatur. Die Temperaturdifferenz im Inneren der Probe (1) wird durch den Peltier-Effekt hervorgerufen.

Wird eine sprungartige Änderung des Stromflusses vorgenommen, indem der Strom zum Zeitpunkt $t = t_0$ abgeschaltet wird, befindet sich das System in einem Nichtgleichgewichtszustand. In diesem fällt die Spannung zunächst rasch, nachfolgend in einem langsameren exponentiellen Verlauf ab. In der bisher üblichen herkömmlichen Auswertung wurde dieser langsamere exponentielle Verlauf auf einen Zeitpunkt $t = 0$ extrapoliert.

In Fig. 1b) ist der zeitliche Verlauf der Gesamtspannung über einer thermoelektrischen Probe bei Zuschalten und nachfolgendem Abschalten eines Gleichstroms durch die Probe dargestellt. Der Stromfluss wird von einem Ohmschen Spannungsabfall begleitet, der mit dem elektrischen Widerstand der Probe verbunden ist. Durch die mit dem Strom transportierte Peltier-Wärme stellt sich eine Temperaturdifferenz zwischen den Blöcken ein, die sich nach einiger Zeit stabilisiert, wenn die rückströmende Fourier-Wärme den Peltier-Wärmestrom kompensiert. Dies wird gemäß dem Prinzip der Harman-Messung als Gleichgewichtszustand beschrieben. Nach Abschalten des Stroms kann der Temperaturausgleich anhand des Abfallens der Thermospannung verfolgt werden.

Es hat sich jedoch gezeigt, dass innerhalb der ersten Momente unmittelbar nach der sprunghaften Änderung und somit in der vorliegenden beispielhaften Ausführungsform nach dem Abschalten des Stromflusses ein Zustand vorliegt, bei welchem innerhalb des Kontaktmateriales eine Temperaturänderung vorliegt, die durch den beginnenden Temperaturabfall über die Probe beeinflusst wird, während sich die Temperatur der Blöcke noch nicht wesentlich ändert. Durch die übliche Extrapolation wird dies jedoch nicht berücksichtigt, so dass nach Verfahren aus dem Stand der Technik der thermische Widerstand des Kontaktmaterials nicht berücksichtigt wurde.

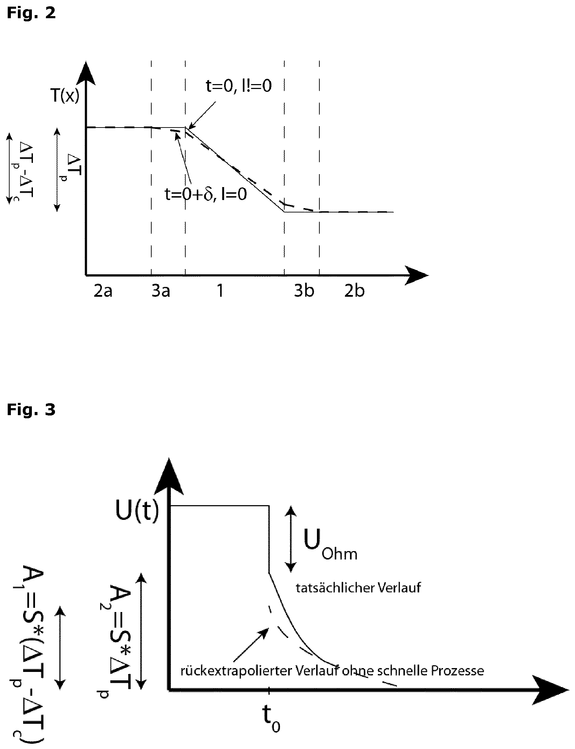

In Fig. 2 ist ein Temperaturverlauf über den Blöcken, Kontakten und Probe (1) dargestellt. Die durchgezogene Linie zeigt den Gleichgewichtszustand nach Einschalten eines Stroms, wie in Schritt d) des erfindungsgemäßen Verfahrens beschrieben. Die gestrichelte Linie zeigt den Nichtgleichgewichtszustand nach Abschalten des Stroms (Schritte e)) nach einer kurzen Zeit unter Vernachlässigung der trägeren Änderung der Blocktemperatur.

Es hat sich nun gezeigt, dass innerhalb einer ersten kurzen Phase nach der Abschaltung des Stroms der Abfall der Thermospannung nicht dem späteren einfachen exponentiellen Gesetz folgt. Diese Abweichung ist messbar, so dass erfindungsgemäß über eine Dauer, die kurz gegen die Halbwertszeit des Abklingens der Temperaturdifferenz ist, Messungen mit hoher Messrate durchgeführt werden. Das heißt, dass möglichst unmittelbar nach Abschalten des Stromes eine erste Messung vorgenommen wird und dann nach jeweils einer kurzen Zeitspanne (deutlich kürzer als die Halbwertszeit des ersten raschen Spannungsabfalls) eine weitere Messung vorgenommen wird und so weiter. Üblicherweise wird die Messung bereits vor dem Abschalten begonnen; für die Harman-Messung ist die Kenntnis der Messspannung vor dem Ab- oder Umschalten des Stroms zwingend notwendig. Nach einer kurzen Zeit, die in der Regel klein gegen die Halbwertszeit des folgenden Abklingens ist, ist der auf das Kontaktmaterial zurückzuführende Anteil der Thermospannung nicht mehr messbar, und die Messung der Spannung wird in der üblichen Weise über eine Dauer von etwa 3 bis 5 Halbwertszeiten des langsamen Abfalls fortgeführt (Schritt g) des erfindungsgemäßen Verfahrens). Hier wird der exponentielle Abfall der Spannung über die Zeit dann dargestellt.

Aus der Extrapolation des gemessenen Spannungsabfalls hin zum Zeitpunkt $t_0$ kann eine Amplitude $A_1$ bestimmt werden. Entsprechend der Temperaturführung der Probenumgebung und anderen Besonderheiten der Ausführung der Messanordnung kann es erforderlich sein, diesem grundsätzlich exponentiellen Abfall im Sinne einer verbesserten Genauigkeit des Verfahrens eine schwach geneigte lineare Funktion zu überlagern, nämlich dann, wenn die gesamte Probenhalterung einer schwachen Drift der Mitteltemperatur ausgesetzt ist; dies ist auch im herkömmlichen Verfahren bekannt und für die Erfindung nicht relevant. Aus der Messung unmittelbar nach Abschaltung des Stromes in Schritt f) des erfindungsgemäßen Verfahrens kann eine Amplitude $A_2$ bestimmt werden, wobei gegebenenfalls Schritt g) ebenfalls die Extrapolation der Messwerte hin zum Zeitpunkt $t_0$ umfasst. Ein entsprechender Messverlauf ist in Fig. 3 gezeigt.

Das Verhältnis $A_2/A_1$ entspricht dem relativen systematischen Fehler der Wärmewiderstandsmessung an der Probe, so dass nun die Wärmeleitfähigkeit und die thermoelektrische Güte unter Berücksichtigung dieses Fehlers bestimmt werden können.

Die Bestimmung im Falle der Abschaltung des Stroms als sprunghafte Änderung, nachdem unter Stromfluss ein Gleichgewichtszustand erreicht war, erfolgt dabei nach der folgenden Formel:

$$ZT = \frac{U_{S,true}}{U_{Ohm}} = \frac{(A_1 + A_2)}{U_{Ohm}}$$

Das nach der Standardmethode bestimmte, inkorrekte $ZT_{old}$ kann folgendermaßen korrigiert werden

$$ZT_{old} = \frac{A_1}{U_{Ohm} + A_2}$$

$$ZT = ZT_{old} \frac{A_1 + A_2}{A_1} * \frac{U_{ohm} + A_2}{U_{ohm}}$$

Die üblicherweise aus der Zeitkonstante $\tau_1$ berechnete Wärmeleitfähigkeit wird durch die thermischen Kontaktwiderstände zu klein bestimmt (Serienschaltung der Widerstände aus Probe und Kontakt). Der korrigierte Wert x ergibt sich aus dem gemessen $\kappa_{meas}$ durch:

$$\kappa = \kappa_{meas} * \frac{A_1 + A_2}{A_1}$$

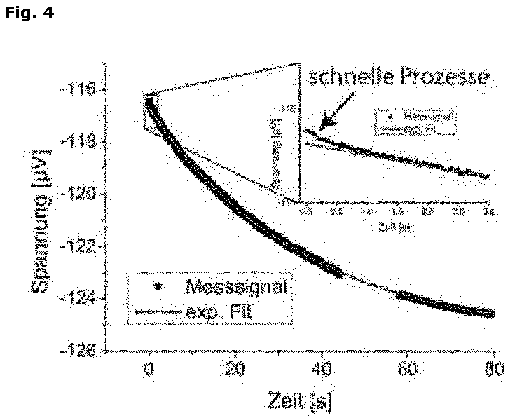

Fig. 4 zeigt die transiente Thermospannung zwischen den Blöcken unmittelbar nach Abschalten des Gleichstroms durch die Probe. Eine vergrößerte Darstellung des Signalverlaufes zu Beginn ist im Inset gezeigt. Die Thermospannung repräsentiert die Temperaturdifferenz über der Probe (nicht diejenige zwischen den Blöcken, denn der metallische Kontaktbereich leistet keinen Beitrag zur Thermospannung). Der Temperaturausgleich folgt einem einfachen exponentiellen Abfall analog zur Kondensatorentladung, wenn die Wärmekapazität der Blöcke groß gegen diejenige der Probe ist. Zu Beginn der Relaxation wird eine kleine, aber signifikante Abweichung vom einfachen exponentiellen Verlauf beobachtet. Die Thermospannung fällt dabei zunächst schneller ab. Dies beruht auf der raschen Ausbildung eines Temperaturabfalls über dem Kontaktbereich nach dem Abschalten. Im vorherigen Gleichgewichtszustand fällt über dem Kontakt keine Temperaturdifferenz ab, da die Peltier-Wärme nicht im Block sondern direkt am thermoelektrischen Material freigesetzt wird. Wird eine Temperaturdifferenz zwischen den Blöcken durch die integrierten Heizer erzeugt, beobachtet man diesen anfänglichen rascheren Abfall nicht. Der schnellere Ausgleich zu Anfang beschreibt den beginnenden Temperaturausgleich über der Probe synchron zur Ausbildung der Temperaturdifferenz über die Kontakte, während die Blocktemperaturen sich zunächst noch nicht verändern. Die Rückextrapolation des späteren, langsameren exponentiellen Abklingens auf den Abschaltzeitpunkt beschreibt einen Zustand, bei dem sich die Gleichgewichts-Temperaturdifferenz der Blöcke entsprechend dem thermischen Potentiometerverhältnis zwischen Probe und Kontakten aufteilt. Die Amplitude des schnell abfallenden Signalanteils im Vergleich zur Spannung der langsamen Relaxation repräsentiert damit das Verhältnis der Wärmewiderstände von Kontakten und Probe, sofern einer der Blöcke adiabatisch von der Umgebung separiert ist. Ideal für die Durchführung der Messung ist eine adiabatische Isolation beider Blöcke; erfolgt sie nur einseitig und tauscht der andere Block einen nennenswerten Wärmestrom mit der Umgebung aus, muss der exponentielle Fit des langsamen Temperaturausgleichs zusätzlich einen linearen Term enthalten. Dies verbessert die Genauigkeit der Bestimmung der Amplitude $A_1$, ist jedoch für den Kern der Erfindung nicht ausschlaggebend.

**Patentansprüche**

1. Verfahren zur Bestimmung der Wärmeleitfähigkeit $\kappa$ und der thermoelektrischen Güte $zT$ unter Eliminierung des Kontakt-Wärmewiderstandes $R_C^{th}$ an einer Probe (1), die ein thermoelektrisches Material umfasst, wobei die Probe (1) zwei räumlich voneinander getrennte Kontaktflächen aufweist und der Abstand zwischen diesen Kontaktflächen der Länge / entspricht, wobei das Verfahren die folgenden Schritte umfasst:

   a) in Kontakt bringen einer ersten Kontaktfläche der Probe (1) über ein erstes Kontaktmaterial (3a) mit einem ersten Block (2a) und
   b) in Kontakt bringen einer zweite Kontaktfläche der Probe (1) über ein zweites Kontaktmaterial (3b) mit einem zweiten Block (2b),

   wobei erster Block (2a) und zweiter Block (2b) ein Metall und/oder eine metallische Beschichtung aufweisen, wobei wenigstens einer der Blöcke adiabatisch von der Umgebung abgeschirmt ist,

   c) Anbringen mindestens eines ersten Leitungspaares auf dem ersten Block (2a) und auf dem zweiten Block (2b), derart, dass sie über den jeweiligen Block (2a, 2b) elektrisch leitend mit dem jeweiligen Kontaktmaterial (3a, 3b) verbunden sind, so dass ein Gleichstrom von einem Block durch die Probe in den anderen Block fließen kann, sowie Aufbringen mindestens eines zweiten Leitungspaares bestehend aus Spannungssonden auf dem ersten und dem zweiten Block (2a, 2b), sodass eine Spannung V zwischen der Spannungssonde auf dem ersten Block (2a) und der Spannungssonde auf dem zweiten Block (2b) gemessen werden kann,
   d) Erreichen eines Gleichgewichtszustandes zwischen einer Peltierwärme, die mit einem elektrischen Strom durch die Probe (1) über das erste Leitungspaar gepumpt wird, und einer rückfließenden Fourierwärme aufgrund der sich unter adiabatischem Abschluss aufbauenden Temperaturdifferenz und Messung einer Spannung $V_1$ über das zweite Leitungspaar bestehend aus Spannungssonden,
   e) Änderung der Stromstärke zum Zeitpunkt $t_0$,
   f) zeitlich aufgelöste Messung der Spannung $V_1$ zwischen den Spannungssonden des zweiten Leitungspaares über einen Zeitraum unmittelbar nach Änderung der Stromstärke in Schritt e), wobei der Zeitraum wenigstens eine Halbwertszeit eines raschen Abklingens umfasst und die Messung der Spannung $V_1$ mit einer Abtastrate erfolgt, die es ermöglicht, innerhalb der ersten Halbwertszeit wenigstens 10, insbesondere wenigstens 100, Messwerte aufzuzeichnen,
   g) sich an die Messung nach Schritt f) anschließende zeitaufgelöste Messung der Spannung $V_1$ zwischen den Spannungssonden des zweiten Leitungspaares über einen Zeitraum eines langsamen Abklingens bis sich das System annähernd auf einen neuen Gleichgewichtszustand eingestellt hat, mit einer Datenrate von mindestens 5, insbesondere mindestens 20, Werten pro Halbwertszeit des langsamen Abklingens beim Einlaufen in den neuen Gleichgewichtszustand,

wobei der Zeitraum in Schritt f) durch ein rasches Abfallen der Spannung im Vergleich mit dem Zeitraum in Schritt g), in welchem ein gleichmäßiges langsames Abklingen nach einem Exponentialgesetz erfolgt, gekennzeichnet ist,

h) numerische Anpassung von Daten der zeitaufgelösten Messung der Spannung $V_1$ aus Schritt g) durch eine exponentielle Funktion oder die Summe aus einer linearen und einer exponentiellen Funktion und zeitliche Extrapolation dieser Funktion des gemessenen Spannungsabfalls aus Schritt g) zum Erhalt einer Basislinie bis zum Zeitpunkt $t_0$, wobei aus der Extrapolation des gemessenen Spannungsabfalls hin zum Zeitpunkt $t_0$ eine Amplitude $A_1$ bestimmt wird,

i) Bilden der Differenz aus dieser Basislinie und den experimentellen Daten aus Schritt f), wobei die Differenz bei $t_0$ der Amplitude $A_2$ entspricht, und Bildung des Verhältnisses $A_2/A_1$, welches den relativen systematischen Fehler einer Wärmewiderstandsmessung an der Probe verursacht durch den Wärmewiderstand des Kontaktes angibt,

j) Bestimmung der Wärmeleitfähigkeit $\kappa$ und der thermoelektrischen Güte $zT$ unter Berücksichtigung des relativen systematischen Fehlers aus Schritt i).

2. Verfahren nach Anspruch 1, **dadurch gekennzeichnet, dass** der Gleichgewichtszustand in Schritt d) in einem Zustand erreicht wird, in welchem ein Gleichstrom über die Blöcke (2a, 2b) mittels des ersten Leitungspaares zugeführt wird, so dass der Strom von dem ersten Block (2a) zu dem zweiten Block (2b) fließt, wobei der Strom durch das erste Kontaktmaterial (3a), die Probe (1) und das zweite Kontaktmaterial (3b) fließt.

3. Verfahren nach Anspruch 2, **dadurch gekennzeichnet, dass** die Änderung der Stromstärke in Schritt e) zum Zeitpunkt $t_0$ durch ein Abschalten des Stromes erfolgt.

4. Verfahren nach einem der Ansprüche 1 bis 3, **dadurch gekennzeichnet, dass** erster Block (2a), zweiter Block (2b), erstes Kontaktmaterial (3a), zweites Kontaktmaterial (3b) und die in Schritt c) aufgebrachten Spannungssonden einen Seebeck-Koeffizienten $S$ betragsmäßig von 10 $\mu$V/K oder weniger aufweisen.

5. Verfahren nach einem der Ansprüche 1 bis 4, **dadurch gekennzeichnet, dass** erster Block (2a), zweiter Block (2b), erstes Kontaktmaterial (3a), zweites Kontaktmaterial (3b) und die in Schritt c) aufgebrachten Spannungssonden eine elektrische Leitfähigkeit von wenigstens $10^4$ S/cm aufweisen.

6. Verfahren nach einem der Ansprüche 1 bis 5, **dadurch gekennzeichnet, dass** man es bei Temperaturen von 4 K bis 1500 K durchführt.

7. Verfahren nach einem der Ansprüche 1 bis 6, **dadurch gekennzeichnet, dass** das thermoelektrische Material der Probe (1) ausgewählt ist aus Skutteruditen, Clathraten, Halb-Heusler-Verbindungen, Zintl-Verbindungen, quaternäre Chalcogeniden, Telluriden, Siliziden, Übergangsmetallen und ihren Mischkristallen, Sulfiden, Antimoniden.

## Claims

1. Method for determining the thermal conductivity $\kappa$ and the thermoelectric quality $zT$ with elimination of the contact thermal resistance $R_C{}^{th}$ on a sample (1) which comprises a thermoelectric material, the sample (1) having two spatially separated contact surfaces and the distance between these contact surfaces corresponding to the length $l$, the method comprising the following steps:

a) bringing a first contact surface of the sample (1) into contact with a first block (2a) via a first contact material (3a) and

b) bringing a second contact surface of the sample (1) into contact with a second block (2b) via a second contact material (3b),

wherein the first block (2a) and the second block (2b) comprise a metal and/or a metallic coating, wherein at least one of the blocks is adiabatically shielded from the environment,

c) attaching at least one first pair of leads to the first block (2a) and to the second block (2b) such that they are electrically conductively connected to the respective contact material (3a, 3b) via the respective block (2a, 2b), so that a direct current can flow from one block through the sample into the other block, and applying at least one second pair of leads consisting of voltage probes to the first and second blocks (2a, 2b), so that a voltage V can be measured between the voltage probe on the first block (2a) and the voltage probe on the second block (2b),

d) Achieving a state of equilibrium between a Peltier heat pumped with an electric current through the sample (1) via the first pair of conductors and a Fourier heat flowing back due to the temperature difference building up under adiabatic closure and measuring a voltage $V_1$ via the second pair of conductors consisting of voltage probes,

e) Change in the current at time $t_0$,

f) time-resolved measurement of the voltage $V_1$ between the voltage probes of the second pair of conductors over a period of time immediately after the change in current intensity in step e), the period of time comprising at least one half-life of a rapid decay and the measurement of the voltage $V_1$ being carried out at a sampling rate which makes it possible to record at least 10, in particular at least 100, measured values within the first half-life,

g) subsequent to the measurement according to step f), time-resolved measurement of the voltage $V_1$ between the voltage probes of the second pair of conductors over a period of slow decay until the system has approximately reached a new equilibrium state, with a data rate of at least 5, in particular at least 20, values per half-life of the slow decay when entering the new equilibrium state,

whereby the period in step f) is **characterized by** a rapid drop in voltage compared to the period in step g), in which a uniform slow decay takes place according to an exponential law,

h) numerical fitting of data of the time-resolved measurement of the voltage $V_1$ from step g) by an exponential function or the sum of a linear and an exponential function and temporal extrapolation of this function of the measured voltage drop from step g) to obtain a baseline up to the time $t_0$, an amplitude $A_1$ being determined from the extrapolation of the measured voltage drop to the time $t_0$,

i) Forming the difference between this baseline and the experimental data from step f), whereby the difference at $t_0$ corresponds to the amplitude $A_2$, and forming the ratio $A_2/A_1$, which indicates the relative systematic error of a thermal resistance measurement on the sample caused by the thermal resistance of the contact,

j) Determination of the thermal conductivity $\kappa$ and the thermoelectric quality $zT$, taking into account the relative systematic error from step i).

2. The method according to claim 1, **characterized in that** the equilibrium state in step d) is reached in a state in which a direct current is supplied via the blocks (2a, 2b) by means of the first pair of conductors so that the current flows from the first block (2a) to the second block (2b), the current flowing through the first contact material (3a), the sample (1) and the second contact material (3b).

3. Method according to claim 2, **characterized in that** the change in current intensity in step e) at time $t_0$ is caused by switching off the current.

4. Method according to one of claims 1 to 3, **characterized in that** the first block (2a), second block (2b), first contact material (3a), second contact material (3b) and the voltage probes applied in step c) have a Seebeck coefficient $S$ of 10 μV/K or less.

5. Method according to one of claims 1 to 4, **characterized in that** the first block (2a), second block (2b), first contact material (3a), second contact material (3b) and the voltage probes applied in step c) have an electrical conductivity of at least $10^4$ S/cm.

6. Process according to one of claims 1 to 5, **characterized in that** it is carried out at temperatures of 4 K to 1500 K.

7. The method according to any one of claims 1 to 6, **characterized in that** the thermoelectric material of the sample (1) is selected from skutterudites, clathrates, half-Heusler compounds, Zintl compounds, quaternary chalcogenides, tellurides, silicides, transition metals and their solid solutions, sulfides, antimonides.

**Revendications**

1. Procédé de détermination de la conductivité thermique $\kappa$ et de la qualité thermoélectrique $zT$ en éliminant la résistance thermique de contact $R_C^{th}$ sur un échantillon (1) qui comprend un matériau thermoélectrique, l'échantillon (1) présentant deux surfaces de contact séparées l'une de l'autre dans l'espace et la distance entre ces surfaces de contact correspondant à la longueur $l$, le procédé comprenant les étapes suivantes :

a) mettre en contact une première surface de contact de l'échantillon (1) via un premier matériau de contact (3a) avec un premier bloc (2a) ; et

b) mettre en contact une deuxième surface de contact de l'échantillon (1) avec un deuxième bloc (2b) via un deuxième matériau de contact (3b),

dans lequel le premier bloc (2a) et le deuxième bloc (2b) comprennent un métal et/ou un revêtement métallique, dans lequel au moins un des blocs est protégé adiabatiquement de l'environnement,

c) application d'au moins une première paire de conducteurs sur le premier bloc (2a) et sur le deuxième bloc (2b), de telle sorte qu'ils soient reliés de manière électriquement conductrice au matériau de contact respectif (3a, 3b) via le bloc respectif (2a, 2b), de sorte qu'un courant continu puisse circuler d'un bloc à l'autre à travers l'échantillon, et l'application d'au moins une deuxième paire de conducteurs composée de sondes de tension sur le premier et le deuxième bloc (2a, 2b), de sorte qu'une tension V peut être mesurée entre la sonde de tension sur le premier bloc (2a) et la sonde de tension sur le deuxième bloc (2b),

d) obtention d'un état d'équilibre entre une chaleur Peltier, qui est pompée par un courant électrique à travers l'échantillon (1) via la première paire de conducteurs, et une chaleur de Fourier à reflux en raison de la différence de température qui s'établit sous fermeture adiabatique, et mesure d'une tension $V_1$ via la deuxième paire de conducteurs constituée de sondes de tension,

e) variation de l'intensité du courant au moment $t_0$,

f) mesure résolue dans le temps de la tension $V_1$ entre les sondes de tension de la deuxième paire de lignes sur une période de temps immédiatement après la modification de l'intensité du courant à l'étape e), la période de temps comprenant au moins une demi-vie d'une décroissance rapide et la mesure de la tension $V_1$ s'effectuant avec un taux d'échantillonnage qui permet d'enregistrer au moins 10, en particulier au moins 100, valeurs de mesure pendant la première demi-vie,

g) mesure résolue en temps, faisant suite à la mesure selon l'étape f), de la tension $V_1$ entre les sondes de tension de la deuxième paire de lignes sur une période d'une lente décroissance jusqu'à ce que le système se soit approximativement réglé sur un nouvel état d'équilibre, avec un débit de données d'au moins 5, en particulier d'au moins 20, valeurs par demi-temps de la lente décroissance lors de l'entrée dans le nouvel état d'équilibre,

la période de temps à l'étape f) étant **caractérisée par** une chute rapide de la tension par rapport à la période de temps à l'étape g), dans laquelle se produit une décroissance lente et régulière selon une loi exponentielle,

h) adaptation numérique de données de la mesure résolue en temps de la tension $V_1$ de l'étape g) par une fonction exponentielle ou la somme d'une fonction linéaire et d'une fonction exponentielle et extrapolation dans le temps de cette fonction de la chute de tension mesurée de l'étape g) pour obtenir une ligne de base jusqu'à l'instant $t_0$, une amplitude $A_1$ étant déterminée à partir de l'extrapolation de la chute de tension mesurée vers l'instant $t_{(0)}$,

i) former la différence entre cette ligne de base et les données expérimentales de l'étape f), la différence à $t_0$ correspondant à l'amplitude $A_2$,

et former le rapport $A_2/A_1$, qui indique l'erreur systématique relative d'une mesure de résistance thermique sur l'échantillon causée par la résistance thermique du contact,

j) Détermination de la conductivité thermique $\kappa$ et de la qualité thermoélectrique $zT$ en tenant compte de l'erreur systématique relative de l'étape i).

2. Procédé selon la revendication 1, **caractérisé en ce que** l'état d'équilibre à l'étape d) est atteint dans un état dans lequel un courant continu est fourni à travers les blocs (2a, 2b) au moyen de la première paire de conducteurs, de sorte que le courant circule du premier bloc (2a) au second bloc (2b), le courant circulant à travers le premier matériau de contact (3a), l'échantillon (1) et le second matériau de contact (3b).

3. Procédé selon la revendication 2, **caractérisé en ce que** la modification de l'intensité du courant à l'étape e) à l'instant $t_0$ est effectuée par une coupure du courant.

4. Procédé selon l'une quelconque des revendications 1 à 3, **caractérisé en ce que** le premier bloc (2a), le deuxième bloc (2b), le premier matériau de contact (3a), le deuxième matériau de contact (3b) et les sondes de tension déposées à l'étape c) ont un coefficient Seebeck $S$ en valeur absolue de 10 $\mu$V/K ou moins.

5. Procédé selon l'une quelconque des revendications 1 à 4, **caractérisé en ce que** le premier bloc (2a), le deuxième bloc (2b), le premier matériau de contact (3a), le deuxième matériau de contact (3b) et les sondes de tension appliquées à l'étape c) ont une conductivité électrique d'au moins $10^4$ S/cm.

6. Procédé selon l'une des revendications 1 à 5, **caractérisé en ce qu'**on le met en oeuvre à des températures de 4 K à 1500 K.

7. Procédé selon l'une des revendications 1 à 6, **caractérisé en ce que** le matériau thermoélectrique de l'échantillon (1) est choisi parmi les scutterudites, les clathrates, les composés semi-Heusler, les composés Zintl, les chalcogénures quaternaires, les tellurures, les siliciures, les métaux de transition et leurs cristaux mixtes, les sulfures, les antimoniures.

**Fig. 1a**

**Fig. 1b**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **H. KOLB et al.** *Review of Scientific Instruments*, 2015, vol. 86, 073901

- **B. KWON et al.** Review of Scientific Instruments. *Harman-Methode*, 2014, vol. 85, 045108